# NEUE EUROPÄISCHE PATENTSCHRIFT

(11) **EP 2 232 966 B2**
(45) Veröffentlichungstag und Bekanntmachung des Hinweises auf die Entscheidung über den Einspruch: **05.06.2019**
(45) Hinweis auf die Patenterteilung: 31.08.2011
(21) Anmeldenummer: 08859279.5
(22) Anmeldetag: 12.12.2008
(51) Int. Cl.: H05K 5/00, H01R 9/22, H01L 31/048

(54) **ANSCHLUSSDOSE, SYSTEM, VERFAHREN UND VERWENDUNG**
JUNCTION BOX, SYSTEM, METHOD, AND USE
BOÎTE DE JONCTION, SYSTÈME, PROCÉDÉ ET UTILISATION

(30) Priorität: 13.12.2007 DE 102007060023
(43) Veröffentlichungstag der Anmeldung: 29.09.2010
(73) Patentinhaber: Yamaichi Electronics Deutschland GmbH, 85609 Aschheim-Dornach (DE); Yamaichi Electronics Co., Ltd., Ota-ku Tokyo 143-8515 (JP)
(72) Erfinder: BRAUN, Sven, 80687 München (DE)
(74) Vertreter: Müller-Boré & Partner Patentanwälte PartG mbB
(86) Internationale Anmeldenummer: PCT/EP2008/010584
(87) Internationale Veröffentlichungsnummer: WO 2009/074335

(56) Entgegenhaltungen:
- EP-A- 0 325 369
- EP-A- 0 824 273
- EP-A- 1 501 157
- EP-B1- 2 143 147
- WO-A-2008/142016
- WO-A1-03/041227
- WO-A1-2008/124951
- DE-U1-202005 018 884
- Prospekt: 'Sonne, Wind und Wärme', 9/2007
- 'Connectivity News', 3/07
- Datenblatt: 'Conergy Power Plus 190P bis 230P'
- 'Conergy präsentiert erste Module aus neuer Solarfabrik in Frankfurt/Oder' aus Website solarportal24.de

## Beschreibung

Die vorliegende Erfindung betrifft eine Anschlußdose, ein System, ein Verfahren und eine Verwendung.

Herkömmliche Solarmodule zur Erzeugung elektrischer Energie aus Sonnenlicht umfassen eine oder mehrere einzelne Solarzellen. Je nach gewünschter, vom Solarmodul zur Verfügung zu stellenden Spannung und/oder Stromstärke können einzelne Solarzellen innerhalb eines Moduls auch parallel und/oder in Reihe geschaltet und damit zu einer oder mehreren Solarzellengruppen zusammengefaßt werden. Die Solarzellengruppen können zu einem flachen Solarmodul zusammengefaßt werden. Die elektrischen Anschlüsse der Solarzellengruppen des Solarmoduls werden herkömmlicherweise nach außen geführt.

Da die einzelnen Solarzellengruppen unterschiedlich hohe Spannungen erzeugen können, ist für jedes Solarmodul eine Anschlußelektronik notwendig. Solarpaneele, umfassen daher neben dem Solarmodul in der Regel eine elektrische Anschlußdose mit zumindest zwei Kontaktvorrichtungen, wobei Strom über die Kontaktvorrichtungen fließen kann. Das mit der Anschlußdose versehene Solarmodul wird als Solarpaneel bezeichnet. Herkömmlicherweise kann eine Anschlußdose an einem Solarpaneel befestigt und beispielsweise mit zwei Anschlußkabeln zur Abgabe der erzeugten elektrischen Leistung versehen sein.

Da die Effizienz einzelner Solarpaneele Toleranzen unterliegen kann und/oder Fertigungsfehler auftreten können, werden Solarpaneele regelmäßig einzeln beim Hersteller geprüft. Hierbei wird, um die Leistung eines jeden Solarpaneels zu messen, ein Bestrahlungstest durchgeführt, wobei konventionell jedes einzelne Solarpaneel mit Licht, insbesondere Kunstlicht bestrahlt wird und die von dem Solarpaneel erzeugte elektrische Leistung über die Anschlußkabel gemessen wird.

Die Druckschrift EP 1 501 157 A2 offenbart eine Anschlußdose für ein Solarpaneel gemäß dem Oberbegriff von Anspruch 1, die ein Gehäuse mit daran ausgebildeten Verbindern umfaßt.

Die Druckschrift EP 0 824 273 A2 offenbart ein Solarpaneel mit zwei daran fest angeschlossenen Kabeln, wobei die Kabel jeweils mit einer Halteeinrichtung, die zwischen zwei Abstandshaltern angeordnet sind, an dem Solarpaneel befestigt werden können.

Die Druckschrift WO 03/041 227 A1 offenbart eine Anschlußdose mit zwei damit verbundenen Kabeln, wobei die Kabel jeweils durch eine Halteeinrichtung an der Anschlußdose befestigt werden können.

Es ist eine Aufgabe der Erfindung, in einfacher und effizienter Weise, insbesondere kostengünstig eine Prüfung eines Solarmoduls, insbesondere eines Solarpaneels zu ermöglichen. Diese Aufgabe wird durch eine Anschlußdose gemäß Anspruch 1, ein System gemäß Anspruch 10, ein Verfahren gemäß Anspruch 11 und eine Verwendung gemäß Anspruch 13 gelöst. Bevorzugte Ausführungsformen sind Gegenstand der abhängigen Ansprüche.

### Anschlußdose gemäß einem Aspekt

Ein Aspekt der vorliegenden Erfindung betrifft eine Anschlußdose für eine Leiterplatte, insbesondere für ein Solarmodul, umfassend:
- einen Grundkörper,
- einen Außenanschlußbereich mit zumindest einer Kabelkontaktvorrichtung, welche mit einem Endbereich zumindest eines Kabels in Kontakt ist, und
- zumindest eine mit dem Grundkörper verbundene Positionierungsvorrichtung mit zumindest einem Haltebereich, wobei
jeder Haltebereich derart ausgebildet ist, daß ein Kontaktbereich des Kabels an der Positionierungsvorrichtung lösbar fixierbar ist und wobei der Kontaktbereich von dem Endbereich beabstandet ist.

Vorteilhafterweise ermöglicht die zumindest eine Positionierungsvorrichtung der Anschlußdose eine genaue, insbesondere vordefinierte Positionierung des Kabels, welches an der Anschlußdose vormontiert ist bzw. mit der Anschlußdose verbunden ist. Besonders vorteilhaft wird der Kontaktbereich des Kabels in eine vordefinierte bzw. vorbestimmte Position gebracht, wobei die vordefinierte bzw. vorbestimmte Position im wesentlichen durch den Haltebereich der Positionierungsvorrichtung vorgegeben bzw. definiert wird. Somit kann durch eine entsprechende Konfiguration des Haltebereichs und/oder der Positionierungsvorrichtung in einfacher Weise die Position des Kontaktbereichs des Kabels und insbesondere beispielsweise eines in der Nähe des Kontaktbereichs angeordneten Verbinders vorgegeben werden.

Somit kann die Anschlußdose in einem automatisierten Verfahren an der Leiterplatte angeordnet und mit dieser verbunden werden. Anschließend kann besonders vorteilhafterweise ermöglicht werden, daß die Funktionsprüfung dieser Anordnung ebenfalls automatisiert durchführbar ist. Dies wird insbesondere dadurch ermöglicht, daß einem Prüfroboter die vordefinierte Position der Kabel übergeben werden kann, wodurch dieser Prüfroboter das zumindest eine Kabel gezielt anfahren kann, insbesondere ergreifen kann. Somit kann ein Prüfroboter in einfacher Weise einen elektrischen Kontakt mit dem Kabel herstellen und die Funktionsprüfung durchführen, in dem er einen Stromfluß durch das Kabel und/oder eine Spannung mißt die an dem Kabel anliegt.

Folglich kann vorteilhafterweise ein umständliches manuelles Kontaktieren und elektrisches Verbinden des Kabels vermieden werden. Daher kann mittels der erfindungsgemäßen Anschlußdose, im Gegensatz zu einem manuellen Anschließen der Verbinder der Kabel an die Prüfeinrichtung, ein herkömmlicher zeit- und kostenintensiv Bestrahlungstest zur Funktionsprüfung eines Solarmoduls vermieden werden. Vielmehr kann der Bestrahlungstest automatisiert durchgeführt werden, da mittels der erfindungsgemäßen Anschlußdose die Meßkontakte der Prüfeinrichtung mit den Verbindern der Kabel automatisch elektrisch kontaktierbar sind.

### Begriffsbestimmungen

Zum einfacheren Verständnis der Erfindung wird nachfolgend eine Vielzahl von Begriffen beispielhaft definiert.

Die Anschlußdose kann an einer Anschlußseite bzw. -fläche eines Solarmoduls als bevorzugter Leiterplatte anordenbar sein und kann dazu in eine Anordnungsposition gebracht werden. Die "Anschlußseite bzw. -fläche" im Sinne der Erfindung beschreibt eine Seite bzw. Fläche, die insbesondere einer lichtaktiven Seite bzw. fläche gegenüber liegt. in anderen Worten ist die lichtaktive Seite bzw. Fläche ausgelegt, Licht aufzunehmen bzw. in das Solarmodul zu führen. Die "Anschlußseite bzw. - fläche" ist insbesondere die Rückseite des Solarmoduls, mittels welcher das Solarmodul beispielsweise befestigt bzw. montiert werden kann. Mittels der Kabel, können dabei mehrere Solarpaneele über eine Reihenschaltung verbunden werden.

In der "Anordnungsposition" zeigt eine Seite des Grundkörpers (im folgenden als Grundträger bezeichnet), die dazu ausgelegt ist, an dem Solarmodul angeordnet zu werden, nach unten, d.h. Richtung Erdmittelpunkt, wobei das Solarmodul in der Anordnungsposition im wesentlichen parallel zu einem Geoid ist, d.h. parallel zur Normal-Null-Äquipotentialfläche des Erdschwerefeldes zu der die Gravitationskraft immer senkrecht steht. Diese Anordnung kann auch als "horizontal" bezeichnet werden. Die Seite des Grundkörpers der Anschlußdose, die dazu ausgelegt ist, von dem Solarmodul abgewandt angeordnet zu werden, kann dementsprechend als "oben" bezeichnet werden. Entsprechend dieser Nomenklatur ist die lichtaktive Seite des Solarmoduls nach unten ausgerichtet und die Anschlußseite nach oben, wobei das Solarmodul ebenfalls horizontal angeordnet ist. In einer "Betriebsposition" kann die lichtaktive Seite des Solarmoduls und damit die untere Seite des Grundkörpers, die an dem Solarmodul angeordnet ist, durch entsprechende Drehung insbesondere zur Sonne hin ausgerichtet sein. Die vorgenannten Positionen sind beispielhaft und dienen insbesondere als Referenz zur Beschreibung z.B. von Seiten der Anschlußdose und/oder zur Bestimmung von Richtungen, um beispielsweise eindeutig definierbare bzw. bestimmbare Koordinaten anzugeben. Gegebenenfalls "können auch andere Positionen verwendet werden bzw. ein anderes Koordinatensystem.

Durch diese Anordnung ist ein Koordinatensystem bestehend aus einer x-, y-, und z-Richtung derart definiert, daß die x- und γ-Richtungsvektoren zueinander senkrecht stehen und in der Ebene des Solarmoduls liegen. Die x-γ-Ebene kann somit im wesentlichen parallel zu der lichtaktiven Seite sein. Alternativ oder zusätzlich, je nach Ausgestaltung des Solarmoduls, kann die x-γ-Ebene auch im wesentlichen parallel zu der Anschlußseite sein. Insbesondere kann die x-γ-Ebene horizontal sein.

Die z-Richtung wird durch das Kreuzprodukt der x- und γ-Richtungsvektoren derart bestimmt, daß der z-Richtungsvektor in Anordnungsposition antiparallel zur Gravitationskraft, d.h. nach oben, gerichtet ist.

Der Begriff "Kontakt" im Sinne der vorliegenden Erfindung beinhaltet insbesondere elektrischen und/oder mechanischen Kontakt, so daß eine Kabelkontaktvorrichtung ausgelegt ist einen elektrischen und/oder einen mechanischen Kontakt mit einem Kabel herzustellen.

Insbesondere kann die Kabelkontaktvorrichtung zur Herstellung eines mechanischen Kontaktes als Kabeldurchführung durch eine Wandung des Grundkörpers ausgebildet sein, wobei die Kabeldurchführung eine Dichtung, insbesondere einen Dichtring und/oder eine (verschraubbare) Zugentlastung und/oder andere Mittel umfassen kann, die insbesondere dazu geeignet sind, das Innere der Anschlußdose gegen ein Eindringen von Feuchtigkeit, Staub, Tiere usw. abzudichten. Die Dichtung kann zum Beispiel ein rückstellfähiges, insbesondere elastisches und/oder zumindest teilweise plastisch verformbares Element sein, das dazu ausgelegt ist, mit einem durchtretenden Kabel, das auch als Anschlußkabel bezeichnet werden kann, schlüssig in Kontakt zu treten. Die Dichtung kann den Querschnitt des Kabels im wesentlichen vollständig umfangen und in Umfangsrichtung im wesentlichen vollständig kontaktieren, so daß im wesentlichen kein Freiraum zwischen der Dichtung und dem Kabel vorliegt. Beispielsweise kann die Dichtung eine Gummidichtung oder ein Silikondichtung sein. Das Kabel ist vorzugsweise mit zumindest einem elektrischen Kontakt der Anschlußdose derart verbunden, daß ein elektrischer Strom, der von dem Solarmodul erzeugt wird, in das Kabel eingespeist werden kann.

Der Begriff "im wesentlichen" kann im Sinne der vorliegenden Erfindung eine Abweichung von einer gewünschten Eigenschaft beschreiben. Insbesondere kann dies eine geringe Abeichung, d.h. ohne signifikante Änderung der gewünschten Eigenschaft sein, beispielsweise, falls die gewünschte Eigenschaft als Solleigenschaft angesehen wird, kann "im wesentlichen" ein Abweichung von dieser Solleigenschaft um weniger als etwa 50%, weniger als etwa 30%, weniger als etwa 20%, weniger als etwa 10%, weniger als etwa 5%, weniger als etwa 2%, insbesondere weniger als etwa 1 % beschreiben.

Weiter bevorzugt kann die Kabelkontaktvorrichtung ausgebildet sein, um einen elektrischen Kontakt herzustellen. Insbesondere kann die Kabelkontaktvorrichtung einen (wasserdichten) Verbinder, beispielsweise einen Stecker oder eine Buchse, umfassen. Somit kann ein elektrischer Kontakt zwischen der Kabelkontaktvorrichtung und dem Kabel hergestellt werden. Die Kabelkontaktvorrichtung kann hierbei in elektrischem Kontakt mit dem Inneren der Anschlußdose sein, so daß beispielsweise ein Strom aus dem Inneren der Anschlußdose über die Kabelkontaktvorrichtung in das Kabel eingespeist wird.

Der "Endbereich" eines Kabels umfaßt im Sinne der Erfindung einen Bereich, in dem sich das Ende des Kabels sowie bereichsweise das Kabel selbst und gegebenenfalls die an diesem Bereich (insbesondere an das Ende des Kabels) angeordneten bzw. befestigten Vorrichtungen, beispielsweise Verbinder, Halteelemente, Dichtringe, Verschraubungsteile oder ähnliches befinden. Die Länge des Bereiches des Kabels, welcher vom Endbereich umfaßt wird (d.h. die Länge des Endbereichs des Kabels), beträgt vorzugsweise weniger als etwa 1 m, besonders bevorzugt weniger als etwa 20 cm, etwa 10 cm und insbesondere ist der Endbereich des Kabels zwischen etwa 1 mm und etwa 5cm lang. Dabei bedeutet "etwa", daß die Längenangaben bis auf eine relative Abweichung von weniger als 50% des zugrunde liegenden Wertes abweichen, vorzugsweise weniger als 25% und besonders bevorzugt weniger als 10%, weniger als etwa 5%, weniger als etwa 2% insbesondere weniger als etwa 1%.

Vorzugsweise ist die Kabelkontaktvorrichtung mit einem zugeordneten Endbereich eines Kabels in Kontakt, d.h. daß für den Fall, daß mehr als ein Kabel mit mehr als einer Kabelkontaktvorrichtung kontaktiert werden soll, die Endbereiche eines jeden Kabels individuell verschieden ausgebildet sein können und insbesondere auch die gegenstückigen Kabelkontaktvorrichtung entsprechend verschieden ausgebildet sein können, so daß eine eindeutige Zuordnung der einzelnen Kabei mit der jeweiligen Kabelkontaktvorrichtung möglich ist. So könnte jeder Endbereich eines Kabels unterschiedliche Verschraubungselemente und/oder Verbinder umfassen. Beispielsweise könnte bei zwei anzuschließenden Endbereichen zweier Kabel ein Endbereich ein Verschraubungselement ein Rechtsgewinde oder ein Innengewinde aufweisen, während der andere Endbereich ein Linksgewinde und/oder ein Außengewinde aufweist. Das Gewinde kann beispielsweise Bestandteil eines verbinders sein. Das Gewinde kann auch von einem Verbinder beabstandet sein und beispielsweise an dem Kabel angeordnet sein bzw. Bestandteil des Kabels sein. Somit kann in einfacher Weise sichergestellt werden, daß die Kabel mit den richtigen bzw. gewünschten elektrischen Kontakten verbunden sind. In anderen Worten kann die Kabelkontaktvorrichtung, die den Pluspol der Anschlußdose repräsentiert, von der Kabelkontaktvorrichtung verschieden sein, die den Minuspol repräsentiert.

Alternativ hierzu kann beispielsweise der Endbereich des Kabels durch eine als Kabeldurchführung ausgebildete Kabelkontaktvorrichtung durchgeführt sein. Die Kabeldurchführung kann hierbei eine Öffnung des Grundkörpers bzw. der Anschlußdose sein, durch welche das Kabel hindurch geführt werden kann, wobei sich das Kabel und die Kabelkontaktvorrichtung des Außenanschlußbereiches mechanisch kontaktieren. Insbesondere kann diese Kabeldurchführung wasser-, wasserdampf- und/oder luftdicht ausgeführt sein. Besonders bevorzugt ist die Kabeldurchführung als Zugentlastung ausgebildet, die beispielsweise durch Verschrauben den Endbereich des Kabels an der Kabelkontaktvorrichtung mechanisch fixiert. Der elektrische Kontakt zwischen den elektrischen Leitern des Anschlußkabels und der Elektronik der Anschlußdose erfolgt in diesem Fall im Inneren der Anschlußdose durch Verlöten, Verschrauben, Klemmen und/oder ähnlichem an einem Anschlußelement.

In einer anderen bevorzugten Ausführungsform kann ein erster Endbereich des Kabels beispielsweise als Verbinder ausgebildet sein und die Kabelkontaktvorrichtung gegenstückig zu diesem Verbinder ausgeführt sein. Dadurch kann der elektrische und mechanischen Kontakt durch eine Steckverbindung hergestellt werden. Besonders bevorzugt ist die Steckverbindung wasser-, wasserdampf und/oder luftdicht ausgeführt und besonders bevorzugt kann die Steckverbindung durch entsprechende Mittel, insbesondere lösbar, mechanisch fixiert werden, z.B. durch Verschrauben, Einschnappen, Einrasten oder Festklemmen des Verbinders des Kabels mit der Kabelkontaktvorrichtung. Der Verbinder kann auch ein Zugentlastung umfassen, die mit der Kabelkontaktvorrichtung durch Verschrauben, Einrasten usw. verbunden wird.

Der "Kontaktbereich" eines Kabels umfaßt im Sinne der Erfindung einen Bereich, der das Ende des Kabels umfaßt sowie bereichsweise das Kabel selbst und die an diesem Bereich angeordneten bzw. befestigten Vorrichtungen, beispielsweise Verbinder, Halteelemente, Dichtringe, Verschraubungsteile oder ähnliches. Die Länge des Bereiches des Kabels, welcher vom Kontaktbereich umfaßt wird, beträgt vorzugsweise weniger als etwa 1 m, besonders bevorzugt weniger als etwa 20 cm, etwa 10 cm und insbesondere ist der Kontaktbereich des Kabels zwischen etwa 1 mm und etwa 5cm lang.

Vorzugsweise ist jeder Haltebereich zu einem Kontaktbereich eines Kabels zuordenbar, d.h. daß für den Fall, daß mehr als ein Haltebereich an der Anschlußdose ausgebildet ist, können diese Haltebereiche individuell verschieden ausgebildet sein, so daß eine eindeutige Zuordnung der einzelner gegenstückig ausgebildeter Kabel mit dem jeweiligen Haltebereich möglich ist.

Die vorgenannten Ausführen gelten auch für weitere Kabel. Insbesondere gelten die vorgenannten Ausführungen sinngemäß für ein Kabelpaar oder mehrere Kabel, beispielsweise 2, 3, 4, 5 usw. Kabel bzw. 2, 3, 4 usw. Kabelpaare.

Der Begriff "fixierbar" bzw. "fixiert" umfaßt im Sinne der Erfindung eine reibschlüssige, kraftschlüssige und/oder formschlüssige Verbindbarkeit bzw. Verbindung zweier Teile, d.h. beispielsweise des Haltebereiches und des Kontaktbereich des Kabels. Dabei bewirkt der Reib-, Kraft- und/oder Formschluß, daß eine gegenseitige Verlagerung dieser zwei Teile nicht bzw. nur innerhalb der vorbestimmbaren Toleranzen erfolgt oder eine weitere Verlagerung, d.h. ein Lösen der Fixierung, nur unter Aufbringen einer vorbestimmbaren Kraft erfolgt. Beispielsweise kann ein Element an einem anderen Element fixiert sein, indem entsprechende Glieder miteinander in Eingriff treten, insbesondere verrasten, usw.

Der Begriff "beabstandet" insbesondere in Bezug auf die Beabstandung eines Kontaktbereiches von einem Endbereich des Kabels beschreibt im Sinne der Erfindung, daß zwischen dem Kontaktbereich und dem Endbereich ein Kabel mit einer Länge von vorzugsweise mehr als etwa 1 cm, etwa 5 cm, etwa 10 cm, etwa 50 cm und besonders bevorzugt mehr als 1 m angeordnet ist, d.h., daß das Kabel zwischen dem Kontaktbereich und dem Endbereich in etwa die vorgenannte Länge aufweist. Da ein Kabel schleifenförmig ausgelegt sein kann, bedeutet "beabstandet" in diesem Zusammenhang nicht zwangsläufig, daß der "euklidsche Abstand" zwischen Kontaktbereich und Endbereich 1 cm, 5 cm, 10 cm, 50 cm oder 1 m beträgt. Der Abstand entspricht jedoch im wesentlichen dem "euklidischen Abstand", sofern das Kabel geradlinig angeordnet ist.

Vorzugsweise kann die Positionierungsvorrichtung lösbar an dem Grundkörper angeordnet sein, beispielsweise durch eine Steckverbindung. Bevorzugt kann die Positionierungsvorrichtung aus einem thermoplastischen Kunststoff bestehen und mittels eines Formvorgangs nachträglich an die Anschlußdose angebracht werden. Besonders bevorzugt ist die Positionierungsvorrichtung mit dem Grundkörper einteilig ausgebildet, insbesondere als Kunststoffspritzgußteil. Dabei können die Positionierungsvorrichtung und der Grundkörper bzw. Haltebereich und der Grundkörper unmittelbar oder mittelbar, lösbar oder nicht lösbar, miteinander verbunden sein.

Mit anderen Worten kann eine Anschlußdose für eine Leiterplatte, insbesondere für ein Solarmodul, einen Grundkörper, einen Außenanschlußbereich mit zumindest einer Kabelkontaktvorrichtung, welche mit einem zugeordneten Endbereich des Kabels in Kontakt ist und zumindest eine mit dem Grundkörper verbundene Positionierungsvorrichtung mit zumindest einem Haltebereich umfassen. Dabei ist jeder Haltebereich derart ausgebildet, daß ein Kontaktbereich des zugeordneten Kabels an der Positionierungsvorrichtung lösbar fixierbar ist und der Kontaktbereich von dem Endbereich beabstandet ist.

### Bevorzugte Ausführungsformen der Anschlußdose

Vorzugsweise ist die Positionierungsvorrichtung derart ausgelegt, um einen Kontaktbereich in einer vorbestimmten Position insbesondere entsprechend einer Zugriffsposition eines Prüfroboters lösbar zu fixieren.

Dabei kann der Prüfroboter diese Position anfahren, um das zumindest eine Kabel der Anschlußdose an dieser Position elektrisch zu kontaktieren und/oder um das Kabel zu ergreifen und in eine andere Position zu überführen. Es ist auch möglich, daß erst in dieser Position der elektrische Kontakt hergestellt wird.

Vorzugsweise umfaßt die Anschlußdose zwei Positionierungsvorrichtungen. Insbesondere können die zwei Positionierungsvorrichtungen an gegenüberliegenden bzw. entgegengesetzten Seiten des Grundkörpers angeordnet bzw. ausgebildet sein. Beispielsweise kann eine Positionierungsvorrichtung an der rechten und die andere an der linken Seite des Grundkörpers angeordnet sein, wobei der Normalenvektor der rechten Seite des Grundkörpers im wesentlichen parallel zur x-Richtung angeordnet ist und wobei der Normalenvektor der linken Seite im wesentlichen antiparallel dazu ist.

Alternativ kann eine Positionierungsvorrichtung auch an der Vorder- und die andere an der Rückseite des Grundkörpers angeordnet sein, wobei der Normalenvektor der Vorderseite des Grundkörpers im wesentlichen antiparallel zur γ-Richtung angeordnet ist und wobei der Normalenvektor der Rückseite im wesentlichen parallel dazu ist.

Weiter vorzugsweise ist jede Positionierungsvorrichtung ausgelegt, genau ein Kabel zu fixieren.

Vorzugsweise ist jedem Haltebereich genau ein Kabel unvertauschbar zugeordnet.

Insbesondere können der Kontaktbereich des Kabels und der zugehörige Haltebereich gegenstückig und verschieden zu möglichen weiteren Kontakt- bzw. Haltebereichen ausgebildet sein, so daß jedes Kabel nur durch einen (entsprechenden bzw. zugeordneten) Haltebereich fixiert werden kann. Vorteilhafterweise ist somit die elektrische Funktionsprüfung mittels der mit der Anschlußdose verbundenen Kabel besonders einfach, da eine Verpolung, d.h. ein falscher Anschluß der Kabel an der Anschlußdose ausgeschlossen werden kann.

Vorzugsweise umfaßt der Kontaktbereich des Kabels einen Verbinder, welcher an oder in einem Verbinderhaltebereich lösbar fixierbar ist. Der Verbinderhaltebereich ist insbesondere ein Element bzw. Bereich des Haltebereichs.

Vorzugsweise ist der Verbinder entlang einer Verbinder-Einführrichtung V in den Verbinderhaltebereich einführbar und mit dem Verbinderhaltebereich zumindest bereichsweise schlüssig verbindbar.

Die "Verbinder-Einführrichtung" im Sinne der vorliegenden Erfindung ist beispielsweise eine Richtung, entlang welcher der eine oder mehrere Verbinder in den Verbinderhaltebereich eingeführt werden bzw. einführbar sind. Beispielsweise kann die Verbinder-Einführrichtung V antiparallel zur z-Richtung sein. Die Verbinder-Einführrichtung V kann auch parallel zu der Fläche bzw. Oberfläche der Leiterplatte, insbesondere parallel zur x- oder γ-Richtung sein. Die Verbinder-Einführrichtung V kann auch beispielsweise zu der Anschlußdose hin gerichtet sein.

Der Begriff "schlüssig verbindbar" bzw. "schlüssig verbunden" beschreibt im Sinne der vorliegenden Erfindung, daß zwischen einem oder mehreren Teilen, Vorrichtungen oder Bereichen ein zumindest bereichsweiser Reib-, und/oder Kraft-und/oder Formschluß vorliegen kann bzw. vorliegt. Insbesondere bewirkt der Reib-, Kraft- bzw. Formschluß, daß die so miteinander verbindbaren bzw. verbundenen Teile nicht relativ zueinander verlagerbar sind. In anderen Worten sind die Teile fixiert, insbesondere lösbar aneinander fixiert.

Insbesondere ist der Verbinder ausgelegt, um entlang der Verbinder-Einführrichtung V in den Verbinderhaltebereich einführbar und in eine Fixierposition bringbar zu sein, so daß der Verbinder in der Fixierposition mit dem Verbinderhaltebereich zumindest bereichsweise schlüssig, d.h. reib-, kraft- und/oder formschlüssig, verbunden und fixiert ist.

Dabei bewirkt der Reib-, Kraft- oder Formschluß, daß eine Verlagerung des Verbinders aus der Fixierposition entgegen der Verbinder-Einführrichtung V nur unter Aufbringen einer vorbestimmbaren Kraft erfolgt, wobei die Kraft vorzugsweise größer als etwa 0,1 N, besonders bevorzugt größer als etwa 0,5 N, etwa 1 N, etwa 2 N, etwa 5 N, etwa 10 N, etwa 25 N, etwa 50 N oder etwa 70 N ist.

Ferner ist der Verbinder des Anschlußkabels vorzugsweise derart mit dem Verbinderhaltebereich zumindest bereichsweise schlüssig verbindbar bzw. verbunden, so daß seine räumliche Position in der Fixierposition genauer als etwa 1 mm, besonders vorzugsweise genauer als etwa 0,5 mm oder etwa 0,1 mm bestimmt bzw. vorgegeben ist.

Vorzugsweise umfaßt der Kontaktbereich des Kabels einen Bereich des Kabels, welcher in einem Kabelhaltebereich der Anschlußdose lösbar fixierbar ist. Der Kabelhaltebereich ist insbesondere ein Element bzw. Bereich des Haltebereichs.

Vorzugsweise sind Verbinderhaltebereich und der Kabelhaltebereich voneinander getrennt.

In anderen Worten ist es möglich, daß der Haltebereich zweiteilig ist. Die beiden Teile können voneinander beabstandet sein und insbesondere körperlich voneinander getrennte Bauteile sein. Es ist auch möglich, daß der Verbinderhaltebereich und der Kabelhaltebereich ein gemeinsames Bauteil ausbilden, nämlich den Haltebereich, und insbesondere der Verbinderhaltebereich und der Kabelhaltebereich nicht körperlich voneinander getrennt sind, sondern beispielsweise einstückig ausgebildet sind. Zum Beispiel kann der Haltebereich als ein Bauelement in einem Spritzgußverfahren hergestellt werden und der Verbinderhaltebereich und der Kabelhaltebereich als gemeinsames spritzgegossenes Bauteil ausgebildet sein.

Vorzugsweise ist das Kabel entlang einer Kabel-Einführrichtung K in den Kabelhaltebereich einführbar und mit dem Kabelhaltebereich zumindest bereichsweise schlüssig verbindbar.

Die "Kabel-Einführrichtung" im Sinne der vorliegenden Erfindung ist beispielsweise eine Richtung, in der ein oder mehrere Kabel in den Kabelhaltebereich eingeführt werden bzw. einführbar sind. Beispielsweise kann die Kabel-Einführrichtung K parallel oder antiparallel zur z-Richtung sein. Die Kabel-Einführrichtung K kann auch parallel zu der Fläche bzw. Oberfläche der Leiterplatte, insbesondere parallel zur x-oder γ-Richtung sein. Die Kabel-Einführrichtung K kann auch beispielsweise zu der Anschlußdose hin oder von ihr wegzeigend gerichtet sein.

Sind beispielsweise zwei Positionierungsvorrichtung vorgesehen, die beispielsweise an gegenüberliegenden Seiten der Anschlußdose angeordnet sein können, kann für jede Positionierungsvorrichtung eine Kabel-Einführrichtung K existieren, wobei die beiden Kabel-Einführrichtungen K im wesentlichen antiparallel sein können. Es ist auch möglich, daß die beiden Kabel-Einführrichtungen K einen anderen Winkel miteinander einschließen können.

Insbesondere kann der Durchmesser des Kabels derart ausgelegt sein, um entlang der Kabel-Einführrichtung K in den Kabelhaltebereich einführbar und in eine Halteposition bringbar zu sein, so daß das Kabel in der Halteposition mit dem Kabelhaltebereich zumindest bereichsweise schlüssig, d.h. reib-, kraft- und/oder formschlüssig, verbunden und gehalten bzw. fixiert ist.

Insbesondere kann der Kabelhaitebereich im Querschnitt Ω-förmig bzw. C-förmig ausgebildet sein, wobei die Schenkel des Ω bzw. des C. verformbar, insbesondere elastisch verformbar ausgebildet sein können, so daß ein Kabel, welches entlang der Kabel-Einführrichtung K in den Kabelhaltebereich eingeführt wird, die Schenkel in einer Richtung verschieden zu der Kabel-Einführrichtung K, insbesondere in einer Richtung senkrecht zur Kabel-Einführrichtung K im wesentlichen elastisch verformt. Nach vollständigem Einführen des Kabels und Erreichen der Halteposition stellen sich die elastisch verformten Schenkel zurück, insbesondere in ihre Ausgangsposition, und fixieren das Kabel durch zumindest bereichsweisen Formschluß im Kabelhaltebereich. Die Schenkel können sich vollständig zurückstellen oder zumindest teilweise, so daß der vorgenannte Kontakt mit dem Kabel erreicht wird.

Altemativ kann der Kabelhaltebereich im Querschnitt auch U-förmig ausgebildet sein, wobei zumindest ein Schenkel des Kabelhaltebereiches elastisch verformbar oder starr sein kann.

Die Ebene des Querschnittes ist im wesenlichen senkrecht zur Kabel-Einführrichtung K und im wesentlichen parallel zur Längserstreckung des Kabels bzw. zur Kabelachse.

Der Außendurchmesser des Kabels kann insbesondere derart ausgelegt sein, daß das Kabel und der Kabelhaltebereich durch eine elastische Verformung der Schenkel und/oder der Kabelisolierung in Reib- bzw. Formschluß gelangen. Entsprechend kann auch der Kabelhaltebereich an ein entsprechendes Kabel angepaßt sein. Dies gilt beispielhaft für einen Ω-förmigen bzw. Ω-förmigen und/oder eine U-förmigen Haltebereich.

Andererseits kann das Kabel innerhalb des Kabelhaltebereiches entlang der Kabel-Einführrichtung K frei beweglich sein. Das Kabel wird dann dennoch durch den Kabelhaltebereich gehalten, wenn der Bereich des Kabels, der in den Kabelhaltebereich eingeführt wird bzw. eingeführt ist, hinreichend nahe an dem Kontaktbereich des Kabels angeordnet ist, an dem der Verbinder angeordnet ist. Da die räumliche Position des an dem Kabel angeordneten Verbinders in der Fixierposition hinreichend genau bestimmt ist und das Kabel eine nur begrenzte Flexibilität aufweist, ist es vorteilhafterweise möglich, daß der Verbinderhältebereich und der Kabelhaltebereich derart angeordnet werden, daß der in der Kabelhaltebereich eingeführte Bereich des Kabels sich aufgrund der Fixierung des Verbinders und der begrenzten Kabelflexibilität nicht soweit entgegen der Kabel-Einführrichtung K bewegen läßt, um das Kabel aus dem Kabelhaltebereich zu entfernen.

Vorzugsweise schließen die Verbinder-Einführrichtung V und die Kabel-Einführrichtung K einen Winkel α ungleich Null Grad ein. Besonders bevorzugt ist der Winkel α größer als etwa 30 Grad, insbesondere etwa 90 Grad.

Vorteilhafterweise kann mit dieser Anordnung eine translatorische Verlagerung des Verbinders auf eine der drei Raumrichtungen beschränkt werden und eine translatorische Verlagerung des Kabels auf eine andere, insbesondere senkrecht dazu stehende, der drei Raumrichtungen beschränkt werden. Bei einer entsprechend hohen Starrheit des Kabels ist eine Verlagerung des Verbinders durch die Fixierung des Kabels und eine Verlagerung des Kabels aufgrund der Fixierung des Verbinders gehemmt, im wesentlichen unmöglich, so daß der Kontaktbereich des Kabels zuverlässig fixiert und positioniert ist.

### System gemäß einem Aspekt

Ein Aspekt der vorliegenden Erfindung betrifft ein System, welches zumindest eine im wesentlichen plattenförmige Leiterplatte, insbesondere ein Solarmodul, und zumindest eine Anschlußdose mit den oben beschriebenen Merkmalen umfaßt.

### Verfahren gemäß einem Aspekt

Ein Aspekt der vorliegenden Erfindung betrifft Verfahren zum automatischen Verbinden einer Anschlußdose mit einer Leiterplatte, insbesondere einem Solarmodul, mit den Schritten:
- Bereitstellen der Leiterplatte
- Bereitstellen der Anschlußdose, welche umfaßt:
   - einen Grundkörper,
   - einen Außenanschlußbereich mit zumindest einer Kabelkontaktvorrichtung,
   - zumindest ein Kabel, wobei ein Endbereich eines jeden Kabels elektrisch mit einem Anschlußelement verbunden ist und ein Kontaktbereich eines jeden Kabels einen Verbinder aufweist,
   - zumindest eine mit dem Grundkörper verbundene Positionierungsvorrichtung mit zumindest einem Haltebereich, wobei jeder Haltebereich derart ausgebildet ist, daß ein Kontaktbereich des Kabels an der Positionierungsvorrichtung lösbar fixierbar ist,
- Anordnen der Anschlußdose an einer Fläche der zumindest einen Leiterplatte, wobei die Anschlußdose mit der Leiterplatte elektrisch verbunden wird,
- Kontaktieren, insbesondere automatisches Kontaktieren, des zumindest einen Verbinders mittels einer Prüfeinrichtung,
- Prüfen der Funktion des Systems umfassend Anschlußdose und Leiterplatte.

### Bevorzugte Ausführungsvarianten des Verfahrens

Das Anschlußelement kann ein elektrischer Kontakt bzw. ein elektrisches Kontaktelement zwischen den elektrischen Leitern des Kabels und der Elektronik der Anschlußdose bzw. dem Stromausgang des Solarmoduls sein, welcher bzw. welches sowohl im Inneren der Anschlußdose angeordnet sein kann, aber auch ein nach außen gewandter Steckkontakt sein kann, wobei jeweils eine mittelbare oder unmittelbare elektrische Verbindung zu Leiterplatte hergestellt werden kann.

Insbesondere kann die Anschlußdose zwei Kabel an zwei verschiedenen Kabelkontaktvorrichtungen aufweisen, die als Eingangs- bzw. Ausgangsleitung der Anschlußdose dienen. Diese zwei Kabel können jeweils einer Positionierungsvorrichtung, insbesondere unvertauschbar, zugeordnet sein, so daß die Position der Eingangs- und der Ausgangsleitung fixiert sind.

Zur Funktionsprüfung wird ein elektrischer Kontakt zu der Eingangs- und der Ausgangsleitung hergestellt und zwischen diesen beiden Punkten beispielsweise der elektrische Widerstand, die anliegende Spannung, der fließende Strom, die dort abgreifbare elektrische Leistung (z.B. bei der Bestrahlung eines Solarmoduls mit Licht) oder ähnliches gemessen und mit Soll-Werten verglichen. Bei Abweichungen von den Soll-Werten wird dies dokumentiert und beispielsweise das geprüfte System als Ausschuß markiert.

Vorzugsweise umfaßt das Verfahren den weiteren Schritt: Lösen des Kontaktbereichs von der Positionierungsvorrichtung.

Dadurch kann beispielsweise der Kontaktbereich des Kabels einer Prüfvorrichtung zugeführt werden. Beispielsweise kann der Kontaktbereich einen Stecker umfassen, welcher durch einen Roboter in eine passende Buchse der Prüfvorrichtung eingesteckt wird.

Weiterhin kann ein Aspekt der vorliegenden Erfindung eine Positionierungsvorrichtung, wie oben beschrieben, betreffen, wobei die Positionierungsvorrichtung an der Anschlußdose anordenbar ist, insbesondere daran steckbar und/oder daran klebbar ist.

### Verwendung gemäß einem Aspekt

Ein Aspekt der vorliegenden Erfindung betrifft die Verwendung einer Anschlußdose mit den oben beschriebenen Merkmalen, zur Anordnung an eine im wesentlichen plattenförmige Leiterplatte, insbesondere an ein Solarmodul. Dabei wird die Anschlußdose an einer Fläche der Leiterplatte angeordnet. Insbesondere kann danach die Anschlußdose mit dem Solarmodul elektrisch verbunden werden. Weiterhin kann die Anschlußdose verwendet werden, um die Funktionsfähigkeit der Leiterplatte und insbesondere des Solarmoduls zu überprüfen.

Die Erfindung ist nicht auf die oben beschriebenen Aspekte bzw. Ausführungsformen beschränkt. Vielmehr können einzelne Merkmale der Aspekte und/oder Ausführungsformen beliebig miteinander kombiniert werden und insbesondere somit neue Ausführungsformen gebildet werden. In anderen Worten gelten die obigen Ausführungen zu den einzelnen Merkmalen der Vorrichtung sinngemäß auch für das Verfahren und umgekehrt.

### Figurenbeschreibung

Nachfolgend werden bevorzugte Ausführungsformen der vorliegenden Erfindung anhand der beigefügten Zeichnungen beispielhaft erläutert.

Es zeigt:
- Figur 1:: eine perspektivische Ansicht einer Ausführungsform der Anschlußdose;
- Figur 2:: eine Ansicht gemäß Figur 1 mit vormontierten Anschlußkabeln;
- Figur 3:: eine Ansicht gemäß Figur 1 mit vormontierten Anschlußkabeln, welche in den jeweiligen Positionierungsvorrichtungen aufgenommen sind;
- Figur 4:: eine Seitenansicht der Anschlußdose in γ-Richtung;
- Figur 5:: eine Seitenansicht der Anschlußdose entgegen der γ-Richtung;
- Figur 6:: eine Seitenansicht einer Positionierungsvorrichtung der Anschlußdose;
- Figur 7:: eine Draufsicht der Positionierungsvorrichtung der Anschlußdose;
- Figur 8:: eine Draufsicht der Positionierungsvorrichtung der Anschlußdose mit fixiertem Kabelkontaktbereich.

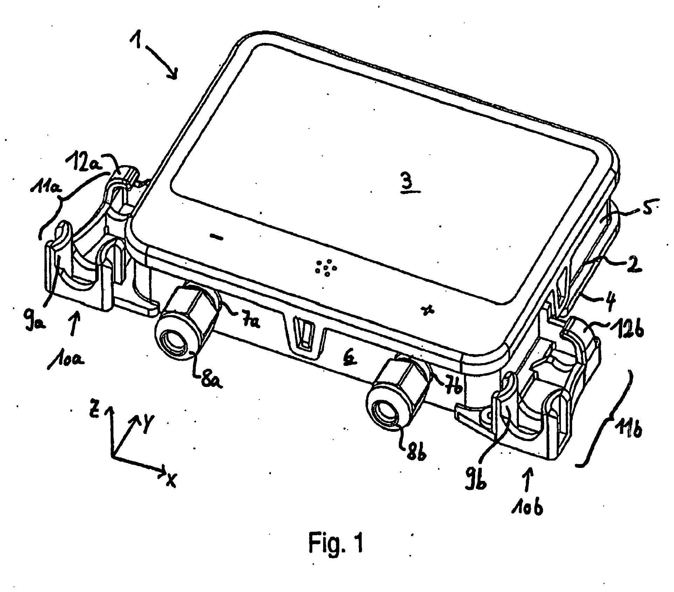

**Figur1** zeigteine perspektivische Ansicht einer Ausführungsform einer Anschlußdose 1 für eine Leiterplatte (nicht gezeigt). Die Anschlußdose 1 weist ein Gehäuse auf, welches einen Grundkörper 2 mit einer Wandung 5 und einem Außenanschlußbereich 6 umfaßt. Die Anschlußdose 1 ist mittels eines Deckels 3, insbesondere wasserdicht, verschließbar.

Der Grundkörper 2 ist an der der Leiterplatte zugewandten Seite der Anschlußdose 1, d.h. unten, angeordnet. Die der Leiterplatte abgewandte Seite der Anschlußdose 1 wird dementsprechend als "oben" bezeichnet. An dieser Seite wird der Deckel 3 angeordnet, um die Anschlußdose 1 zu verschließen. Der Grundkörper 2 dient vorzugsweise der Befestigung der Anschlußdose 1 an der Anschlußseite der Leiterplatte. Der Deckel 3 kann hierbei entfernbar angeordnet sein. Der Deckel 3 kann auch fest mit dem Grundkörper 2 verbunden sein, insbesondere damit verklebt oder auch einstückig mit dem Grundkörper ausgebildet sein.

Der Außenanschlußbereich 6 umfaßt in dieser Ausführungsform zwei Kontaktvorrichtungen 7a, 7b, welche vorzugsweise als wasserdichte Kabelaufnahmen oder Kabeldurchführungen ausgebildet sind. Insbesondere können Verschraubungselemente 8a, 8b die Kabeldurchführung abdichten und das Herausziehen des Kabels 13a, 13b verhindern.

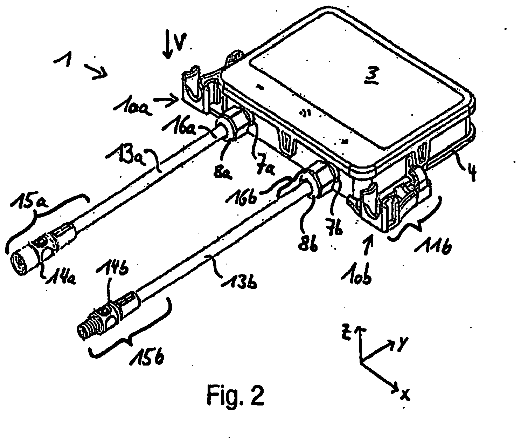

**Figur 2** zeigt eine perspektivische Ansicht der Anschlußdose 1 mit zwei montierten Kabeln 13a, 13b und daran befestigten Verbindern 14a, 14b.

Die Kabel 13a, 13b umfassen Endbereiche 16a, 16b, die mit der Kabelkontaktvorrichtung 7a, 7b mechanisch verbunden sind. Die Endbereiche 16a, 16b sind durch die als Kabeldurchführungen ausgebildeten Kontaktvorrichtungen 7a, 7b durch eine Öffnung des Grundkörpers 2 hindurch geführt. Der elektrische Kontakt zwischen den elektrischen Leitern der Kabel 13a, 13b und der Elektronik der Anschlußdose 1 erfolgt im Inneren der Anschlußdose 1 durch Verlöten, Verschrauben, Klemmen und/oder ähnlichem an einem Anschlußelement (nicht gezeigt).

Die Anschlußdose 1 umfaßt ferner zwei Positionierungsvorrichtungen 10a, 10b, die dazu ausgelegt sind, jeweils einen Kontaktbereich 15a, 15b des Kabels 13a, 13b zumindest bereichsweise in einer vorbestimmten Position zu halten. Dabei ist jeweils ein Haltebereich 11 a, 11 b vorgesehen, um den Kontaktbereich 15a, 15b des Kabels 13a, 13b lösbar zu fixieren.

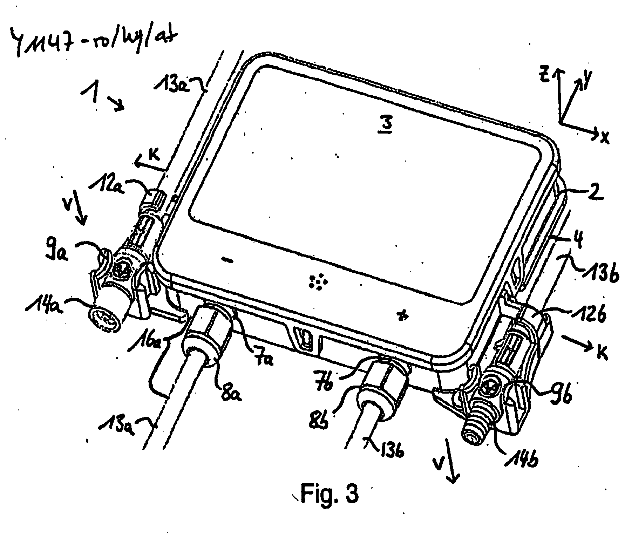

**Figur 3** zeigt eine perspektivische Ansicht der Anschlußdose 1, wobei die Kontaktbereiche 15a, 15b in den jeweiligen Haltebereichen 11a, 11b aufgenommen sind.

Dabei ist jeweils ein Verbinderhaltebereich 9a, 9b vorgesehen, in den die an das Kabel 13a, 13b angebrachten Verbinder 14a, 14b entlang einer Verbinder-Einführrichtung V einführbar sind. Ferner ist jeweils ein Kabelhaltebereich 12a, 12b vorgesehen, in den die Kabel 13a, 13b zumindest bereichsweise 14b entlang einer Kabel-Einführrichtung K einführbar sind.

Die Verbinderhaltebereiche 9a, 9b sind derart ausgebildet, um in bereichsweisen Formschluß mit den Verbindern 14a, 14b zu gelangen. In der gezeigten Ausführungsform weist der Verbinder 14a, 14b konkav geformte Bereiche auf, die durch Einführen des Verbinders 14a, 14b entlang der Verbinder-Einführrichtung V in Formschluß mit entsprechenden konvex geformten Bereichen des Verbinderhaltebereiches 9a, 9b gelangen. Durch den Formschluß ist die translatorische Verlagerung der Verbinder 14a, 14b entlang einer Richtung im wesentlichen senkrecht zur Verbinder-Einführrichtung V gehemmt, insbesondere ist diese Verlagerung im wesentlichen unmöglich bzw. nicht zerstörungsfrei möglich bzw. irreversibel.

Alternativ oder zusätzlich zu den konvexen Bereichen könnten die Verbinder 14a, 14b auch Vor- und/oder Rücksprünge aufweisen, die in entsprechend gegenstückige Rück- und/oder Vorsprünge der Verbinderhaltebereiche 9a, 9b eingreifen..Weiterhin alternativ oder zusätzlich könnten die Verbinder 14a, 14b und/oder die Verbinderhaltebereiche 9a, 9b aus elastisch und/oder plastisch verformbaren Material bestehen, so daß zwischen dem jeweiligen Verbinder 14a, 14b und dem jeweiligen Verbinderhaltebereich 9a, 9b ein Form- und/oder Reibschluß aufgrund der elastischen Verformung bei Einführen entsteht.

Die Kabelhaltebereiche 12a, 12b sind ausgebildet, um in bereichsweisen Form- oder Kraftschluß mit den Kabeln 13a, 13b zu gelangen. In der gezeigten Ausführungsform sind die Kabelhaltebereiche 12a, 12b hakenförmig ausgebildet.

Durch Einführen des Kabels 13a, 13b in den Kabelhaltebereich 12a, 12b ist das jeweilige Kabel 13a, 13b an einer translatorischen Verlagerung entgegen der Verbinder-Einführrichtung V gehemmt, insbesondere ist diese Verlagerung im wesentlichen unmöglich. Durch eine entsprechend hohe Starrheit bzw. geringe Flexibilität des Kabels 13a, 13b ist damit auch der jeweilige Verbinder 14a, 14b gehemmt, sich entgegen der Verbinder-Einführrichtung V zu verlagern. Insbesondere kann auch diese Verlagerung im wesentlichen unmöglich sein.

Das Kabel 13a, welches mit der durch "Minus" (-) gekennzeichneten Kontaktvorrichtung 7a der Anschlußdose 1 verbunden ist; umfaßt einen männlichen bzw. steckerartigen Verbinder 14a, während das Kabel 13b, welches mit der durch "Plus" (+) gekennzeichneten Kontaktvorrichtung 7b der Anschlußdose 1 verbunden ist, einen weiblichen bzw. buchsenartigen Verbinder 14b umfaßt. Dadurch kann eine verpolungssichere elektrische Verbindung mit den Kabeln 13a, 13b der Anschlußdose 1 hergestellt werden. Vorteilhafterweise läßt sich dadurch auch eine Reihenschaltung zwischen zwei oder mehr Anschlußdosen realisieren.

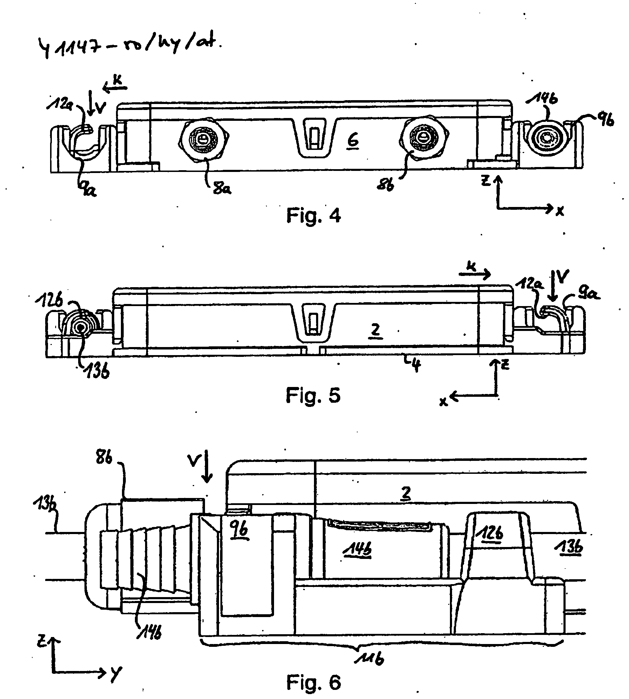

**Figur 4** zeigt eine Seitenansicht der Anschlußdose 1 in γ-Richtung und Figur 5 eine Seitenansicht entgegen der γ-Richtung.

In dem Verbinderhaltebereich 9b ist jeweils ein Verbinder 14b entlang der Verbinder-einführrichtung V eingeführt. Es ist anhand der Ausbildung des gezeigten Verbinderhaltebereiches 9a und des Kabelhaltebereiches 12a zu erkennen, daß die Verbinder-Einführrichtung V im wesentlichen senkrecht auf der Kabel-Einführrichtung K steht.

Die Kabel 13a, 13b sind innerhalb der Kabelhaltebereiche 12a, 12b entlang der Kabel-Einführrichtungen K frei beweglich und entlang anderer Richtungen im wesentlichen unbeweglich. Die Kabel 13a, 13b werden dennoch durch die Kabelhaltebereiche 12a, 12b gehalten, da die Bereiche des Kabels 13b, die in den die Kabelhaltebereiche 12a, 12b einführbar bzw. eingeführt sind, hinreichend nahe an dem Kontaktbereich des Kabels 15a, 15b angeordnet ist, an dem der Verbinder 14a, 14b angeordnet ist. Da die räumliche Position des an dem Kabel 13b angeordneten Verbinders 14b in der Fixierposition bestimmt ist, der Verbinder 14b nicht in entlang der Kabel-Einführrichtungen K verlagert werden kann und das Kabel 13b eine nur begrenzte Flexibilität aufweist, ist der im Kabelhaltebereich 12b eingeführte Bereich des Kabels 13b nicht soweit entgegen der Kabel-Einführrichtung K bewegbar, um das Kabel 13b aus dem Kabelhaltebereich zu entfernen.

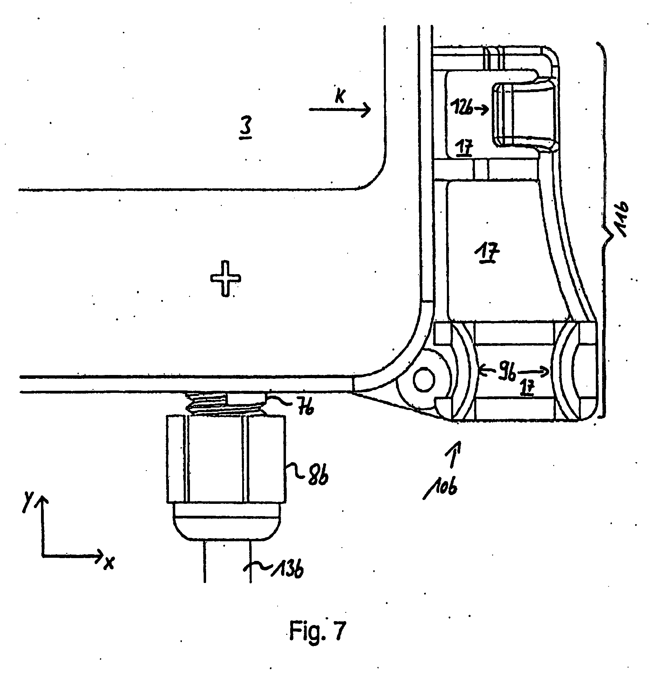

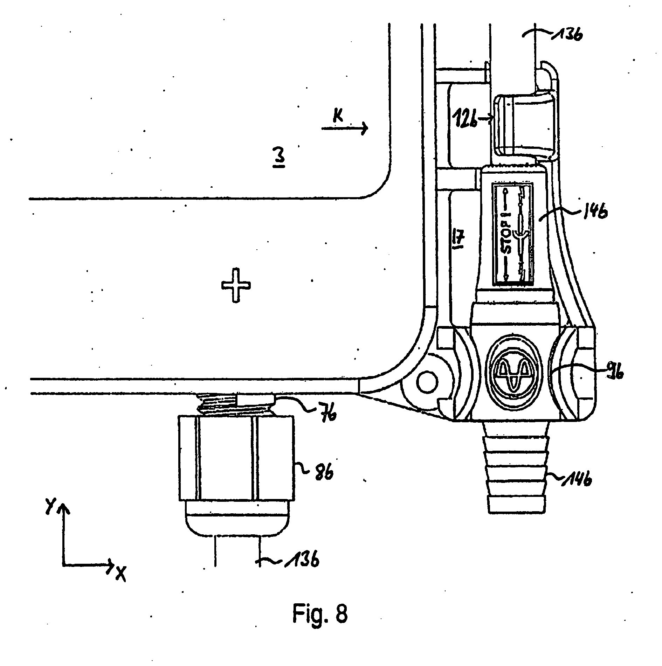

**Figur 6** zeigt eine Seitenansicht der Positionierungsvorrichtung 10b, **Figur 7** eine Draufsicht der Positionierungsvorrichtung 10b ohne fixierten Kabelkontaktbereich 15b und **Figur 8** mit fixiertem Kabelkontaktbereich 15b.

Dabei ist in Figuren 6 und 8 zu erkennen, daß das freie Ende des Verbinders 14b, der an dem fixierten Kabelkontaktbereich 15b angeordnet ist, gegenüber jeder Ebene, die durch eine Gehäusewandung definiert wird, insbesondere der durch den Außenanschlußbereich 6 definierten Ebene, (hier entgegen der γ-Richtung) vorragt, so daß dieses freie Ende durch eine externe Prüfvorrichtung besonders leicht zu kontaktieren ist.

Es ist zu erkennen, daß ein Haltebereich 11 b sowohl einen Verbinderhaltebereich 9b als auch einen davon beabstandeten Kabelhaltebereich 12b aufweisen kann.

Ferner kann die Positionierungsvorrichtung 10b mehrere Öffnungen 17 aufweisen, um den Materialeinsatz zu minimieren. Alternativ könnte die Positionierungsvorrichtung 10b auch mehrteilig ausgebildet sein. Gleichfalls könnten mehrere Positionierungsvorrichtungen 10b mit unterschiedlich ausgebildeten Haltebereichen 11 b einstückig mit dem Grundkörper 2 ausgebildet sein.

Die vorliegende Beschreibung der bevorzugten Ausführungsformen ist nicht auf die oben beschriebenen jeweiligen Figuren beschränkt. Vielmehr gelten die Ausführungen zu den jeweiligen Figuren sinngemäß auch für die weiteren Figuren. Ebenso gelten die zu den Figuren gemachten Ausführungen auch für die vorangegangenen Aspekte und Ausführungsformen. Somit können mittels der zu den Figuren beschrieben Einzelmerkmalen und/oder Einzelmerkmalen der Aspekte und/der Ausführungsformen weitere bevorzugte Ausführungsformen gebildet werden. Insbesondere gelten die Ausführungen für den Verbinderhaltebereich in analoger Weise für den Kabelhaltebereich. Es ist auch möglich, daß der Haltebereich einen ersten Verbinderhaltebereich aufweist, der entsprechend dem oben ausgeführten Verbinderhaltebereich 9a, 9b ausgeführt wird. Anstelle oder zusätzlich zu dem Kabelhaltebereich 12a, 12b kann der Haltebereich auch einen zweiten Verbinderhaltebereich aufweisen, der entsprechend dem Kabelhaltebereich 12a, 12b ausgeführt ist. Sinngemäß kann es auch möglich sein, daß der Haltebereich einen ersten Kabelhaltebereich aufweist, der entsprechend dem Kabelhaltebereich 12a, 12b ausgeführt ist und zusätzlich oder alternativ zu dem Verbinderhaltebereich ein zweiten Kabelhaltebereich aufweisen, der entsprechend dem Verbinderhaltebereich 9a, 9b ausgeführt ist.

### Bezugszeichenliste

- 1: Anschlußdose
- 2: Grundkörper
- 3: Deckel
- 4: Grundträger
- 5: Wandung
- 6: Außenanschlußbereich
- 7a,b: Kontaktvorrichtung
- 8a,b: Verschraubungselement
- 9a,b: Verbinderhaltebereich
- 10a,b: Positionierungsvorrichtungen
- 11a,b: Haltebereich
- 12a,b: Kabelhaltebereich
- 13a,b: Kabel
- 14a,b: Verbinder
- 15a,b: Kontaktbereich des Kabels
- 16a,b: Endbereich des Kabels
- 17: Öffnung
- V: Verbinder-Einführrichtung
- K: Kabel-Einführrichtung

## Patentansprüche

1. Anschlußdose (1) für eine Leiterplatte, insbesondere für ein Solarmodul, umfassend:
- einen Grundkörper (2),
- einen Außenanschlußbereich (6) mit zumindest einer Kabelkontaktvorrichtung (7a, 7b), welche mit einem Endbereich (16a, 16b) zumindest eines Kabels (13a, 13b) in Kontakt ist und
- zumindest eine mit dem Grundkörper (2) verbundene Positionierungsvorrichtung (10a, 10b) mit zumindest einem Haltebereich (11a, 11b),
wobei jeder Haltebereich (11a, 11b) derart ausgebildet ist, daß ein Kontaktbereich (15a, 15b) des Kabels (13a, 13b) an der Positionierungsvorrichtung (10a, 10b) lösbar fixierbar ist und wobei
der Kontaktbereich (15a, 15b) von dem Endbereich (16a, 16b) beabstandet ist, **dadurch gekennzeichnet, daß**
der Kontaktbereich (15a, 15b) des Kabels (13a, 13b) einen Verbinder (14a, 14b) umfaßt, welcher an einem Verbinderhaltebereich (9a, 9b) des Haltebereichs (11a, 11b) lösbar fixierbar ist, und
wobei jedem Haltebereich (11a, 11b) genau ein Kabel (13a, 13b) unvertauschbar zugeordnet ist.

2. Anschlußdose (1) nach Anspruch 1, wobei die Positionierungsvorrichtung (10a, 10b) ausgelegt ist, einen Kontaktbereich (15a, 15b) in einer vorbestimmten Position insbesondere entsprechend einer Zugriffsposition eines Prüfroboters lösbar zu fixieren.

3. Anschlußdose (1) nach Anspruch 1 oder 2, umfassend zwei Positionierungsvorrichtungen (10a, 10b), welche an gegenüberliegenden Seiten des Grundkörpers (2) angeordnet sind.

4. Anschlußdose (1) nach einem der vorhergehenden Ansprüche, wobei jede Positionierungsvorrichtung (10a, 10b) ausgelegt ist, genau ein Kabel (13a, 13b) zu fixieren.

5. Anschlußdose (1) nach einem der vorhergehenden Ansprüche, wobei der Verbinder (14a, 14b) entlang einer Verbinder-Einführrichtung (V) in den Verbinderhaltebereich (9a, 9b) einführbar und mit dem Verbinderhaltebereich (9a, 9b) zumindest bereichsweise schlüssig verbindbar ist.

6. Anschlußdose (1) nach einem der vorhergehenden Ansprüche, wobei der Kontaktbereich (15a, 15b) des Kabels (13a, 13b) einen Bereich des Kabels (13a, 13b) umfaßt, welcher in einem Kabelhaltebereich (12a, 12b) lösbar fixierbar ist.

7. Anschlußdose (1) nach einem der vorangegangenen Ansprüche, wobei der Verbinderhaltebereich (9a, 9b) und der Kabelhaltebereich (12a, 12b) voneinander getrennt sind.

8. Anschlußdose (1) nach Anspruch 6, wobei das Kabel (13a, 13b) entlang einer Kabel-Einführrichtung (K) in den Kabelhaltebereich (12a, 12b) einführbar und mit dem Kabelhaltebereich (12a, 12b) zumindest bereichsweise schlüssig verbindbar ist.

9. Anschlußdose nach Anspruch 8, wobei die Verbinder-Einführrichtung (V) und die Kabel-Einführrichtung (K) einen Winkel ungleich Null einschließen.

10. System umfassend:
- zumindest eine im wesentlichen plattenförmige Leiterplatte, insbesondere ein Solarmodul, und
- zumindest eine Anschlußdose (1) gemäß einem der vorangegangenen Ansprüche.

11. Verfahren zum automatischen Verbinden einer Anschlußdose (1) mit einer Leiterplatte, insbesondere einem Solarmodul, mit den Schritten:
- Bereitstellen der Leiterplatte
- Bereitstellen der Anschlußdose (1), welche umfaßt:
-- einen Grundkörper (2),
-- einen Außenanschlußbereich (6) mit zwei Kabelkontaktvorrichtungen (7a, 7b),
-- zwei Kabeln (13a, 13b), wobei ein Endbereich (16a, 16b) eines jeden Kabels elektrisch mit einem Anschlußelement verbunden ist und ein Kontaktbereich (15a, 15b) eines jeden Kabels (13a, 13b) einen Verbinder (14a, 14b) aufweist
-- zwei mit dem Grundkörper (2) verbundene Positionierungsvorrichtungen (10a, 10b) mit jeweils einem Haltebereich (11a, 11b), wobei
jeder Haltebereich (11a, 11b) derart ausgebildet ist, daß ein Kontaktbereich (15a, 15b) des Kabels (13a, 13b) an der Positionierungsvorrichtung (10a, 10b) und der Verbinder (14a, 14b) an einem Verbinderhaltebereich (9a, 9b) des Haltebereichs (11a, 11b) lösbar fixierbar ist, und
wobei jeder Positioniervorrichtung (10a, 10b) genau ein Kabel (13a, 13b) unvertauschbar zugeordnet ist,
- Anordnen der Anschlußdose (1) an einer Fläche der zumindest einen Leiterplatte, wobei die Anschlußdose (1) mit der Leiterplatte elektrisch verbunden wird,
- Kontaktieren, insbesondere automatisches Kontaktieren, des zumindest einen Verbinders mittels einer Prüfeinrichtung,
- Prüfen der Funktion des Systems umfassend Anschlußdose und Leiterplatte.

12. Verfahren nach Anspruch 11, weiter umfassend den weiteren Schritt:
Lösen des Kontaktbereichs (15a, 15b) von der Positionierungsvorrichtung (10a, 10b).

13. Verwendung einer Anschlußdose (1) gemäß einem der Ansprüche 1 bis 9 zum Anordnen an einer Leiterplatte, insbesondere an einem Solarmodul, wobei die Anschlußdose (1) an einer Fläche der Leiterplatte angeordnet wird.

## Claims

1. Junction box (1) for a printed circuit board, in particular for a solar module, comprising:
- a base body (2),
- an external connection area (6) having at least one cable contacting device (7a, 7b) contacting an end zone (16a, 16b) of at least one cable (13a, 13b), and
- at least one positioning device (10a, 10b) connected to the base body (2) and having at least one retaining zone (11a, 11b),
wherein each retaining zone (11a, 11b) is formed in such a way that a contact zone (15a, 15b) of the cable (13a, 13b) is detachably fixable to the positioning device (10a, 10b), and wherein
the contact zone (15a, 15b) is spaced apart from the end zone (16a, 16b),
**characterised in that**
the contact zone (15a, 15b) of the cable (13a, 13b) includes a connector (14a, 14b) that is detachably fixable to the connector retaining zone (9a, 9b) of the retaining zone (11a, 11b) and
wherein each retaining zone (11a, 11b) has non-exchangeably assigned exactly one cable (13a, 13b).

2. Junction box according to claim 1, wherein the positioning device (10a, 10b) is designed to detachably fix a contact zone (15a, 15b) in a predetermined position in particular according to an access position of an inspection robot.

3. Junction box according to claim 1 or 2, comprising two positioning devices (10a, 10b) being arranged on opposite sides of the base body (2).

4. Junction box (1) according to any of the preceding claims, wherein each positioning device (10a, 10b) is designed to fix exactly one cable (13a, 13b).

5. Junction box (1) according to any of the preceding claims, wherein the connector (14a, 14b) is insertable into the connector retaining zone (9a, 9b) along a connector insertion direction (V) and is at least in zones positively connectable to the connector retaining zone (9a, 9b).

6. Junction box (1) according to any of the preceding claims, wherein the contact zone (15a, 15b) of the cable (13a, 13b) comprises an area of the cable (13a, 13b) that is detachably fixable to a cable retaining zone (12a, 12b).

7. Junction box (1) according to any of the preceding claims, wherein the connector retaining zone (9a, 9b) and the cable retaining zone (12a, 12b) are separated from each other.

8. Junction box (1) according to claim 6, wherein the cable (13a, 13b) is insertable into the cable retaining zone (12a, 12b) along a cable insertion direction (K) and is at least in zones positively connectable to the cable retaining zone (12a, 12b).

9. Junction box according to claim 8, wherein the connector insertion direction (V) and the cable insertion direction (K) enclose a non-zero angle.

10. System comprising
- at least one essentially plate-shaped printed circuit board, in particular a solar module,
- at least one junction box (1) according to any of the preceding claims.

11. Method for automatically connecting a junction box (1) to a printed circuit board, in particular a solar module, comprising the steps of:
- providing the printed circuit board,
- providing the junction box (1) comprising:
-- a base body (2),
-- an external connection area (6) having two cable contacting devices (7a, 7b),
-- two cables (13a, 13b), wherein an end zone (16a, 16b) of each cable is electrically connected to a connection element and a contact zone (15a, 15b) of each cable (13a, 13b) comprises a connector (14a, 14b),
-- two positioning devices (10a, 10b) connected to the base body (2), each having one retaining zone (11a, 11b), wherein
each retaining zone (11a, 11b) is formed in such a way that a contact zone (15a, 15b) of the cable (13a, 13b) is detachably fixable to the positioning device (10a, 10b), and the connector (14a, 14b) is detachably fixable to a connector retaining zone (9a, 9b) of the retaining zone (11a, 11b), and
wherein each positioning device (10a, 10b) has non-exchangeably assigned exactly one cable (13a, 13b),
- arranging the junction box (1) at a surface of the at least one printed circuit board, wherein the junction box (1) is electrically connected to the printed circuit board,
- contacting, in particular automatically contacting, the at least one connector by means of an inspection means,
- inspecting the function of the system including the junction box and the printed circuit board.

12. Method of claim 11, further comprising the further step of:
- detaching the contact zone (15a, 15b) from the positioning device (10a, 10b).

13. Use of a junction box (1) according to any of claims 1 to 9 for arranging a printed circuit board, in particular at a solar module, wherein in the junction box (1) is arranged at a surface of the printed circuit board.

## Revendications

1. Boîte de jonction (1) pour une carte imprimée, notamment pour un module solaire, comprenant :
- un corps de base (2),
- une région de raccord externe (6) avec au moins un dispositif de contact de câble (7a, 7b) qui est en contact avec une région d'extrémité (16a, 16b) d'au moins un câble (13a, 13b) et
- au moins un dispositif de positionnement (10a, 10b) relié au corps de base (2) avec au moins une région de maintien (11a, 11b),
dans laquelle chaque région de maintien (11a, 11b) est réalisée de telle sorte qu'une région de contact (15a, 15b) du câble (13a, 13b) peut être fixée de manière amovible au dispositif de positionnement (10a, 10b) et dans laquelle la région de contact (15a, 15b) est espacée de la région d'extrémité (16a, 16b), **caractérisée en ce que**
la région de contact (15a, 15b) du câble (13a, 13b) comprend un connecteur (14a, 14b) qui peut être fixé de manière amovible à une région de maintien de connecteur (9a, 9b) de la région de maintien (11a, 11b), et
dans laquelle exactement un câble (13a, 13b) est associé de manière non permutable à chaque région de maintien (11a, 11b).

2. Boîte de jonction (1) selon la revendication 1, dans laquelle le dispositif de positionnement (10a, 10b) est conçu pour fixer de manière amovible une région de contact (15a, 15b) dans une position prédéterminée, notamment en fonction d'une position d'accès d'un robot de contrôle.

3. Boîte de jonction (1) selon la revendication 1 ou 2, comprenant deux dispositifs de positionnement (10a, 10b) qui sont disposés sur des côtés opposés du corps de base (2).

4. Boîte de jonction (1) selon l'une quelconque des revendications précédentes, dans laquelle chaque dispositif de positionnement (10a, 10b) est conçu pour fixer exactement un câble (13a, 13b).

5. Boîte de jonction (1) selon l'une quelconque des revendications précédentes, dans laquelle le connecteur (14a, 14b) peut être introduit dans la région de maintien de connecteur (9a, 9b) le long d'une direction d'introduction de connecteur (V) et peut être relié par correspondance au moins par région à la région de maintien de connecteur (9a, 9b).

6. Boîte de jonction (1) selon l'une quelconque des revendications précédentes, dans laquelle la région de contact (15a, 15b) du câble (13a, 13b) comprend une région du câble (13a, 13b) qui peut être fixée de manière amovible dans une région de maintien de câble (12a, 12b).

7. Boîte de jonction (1) selon l'une quelconque des revendications précédentes, dans laquelle la région de maintien de connecteur (9a, 9b) et la région de maintien de câble (12a, 12b) sont séparées l'une de l'autre.

8. Boîte de jonction (1) selon la revendication 6, dans laquelle le câble (13a, 13b) peut être introduit dans la région de maintien de câble (12a, 12b) le long d'une direction d'introduction de câble (K) et peut être relié par correspondance au moins par région à la région de maintien de câble (12a, 12b).

9. Boîte de jonction selon la revendication 8, dans laquelle la direction d'introduction de connecteur (V) et la direction d'introduction de câble (K) incluent un angle différent de zéro.

10. Système comprenant :
- au moins une carte imprimée essentiellement en forme de plaque, notamment un module solaire, et
- au moins une boîte de jonction (1) selon l'une quelconque des revendications précédentes.

11. Procédé pour la connexion automatique d'une boîte de jonction (1) à une carte imprimée, notamment un module solaire, avec les étapes de :
- fourniture de la carte imprimée,
- fourniture de la boîte de jonction (1) qui comprend :
-- un corps de base (2),
-- une région de raccord externe (6) avec deux dispositifs de contact de câble (7a, 7b),
-- deux câbles (13a, 13b), dans lequel une région d'extrémité (16a, 16b) d'un câble est reliée électriquement à un élément de raccord et une région de contact (15a, 15b) d'un câble (13a, 13b) présente un connecteur (14a, 14b),
-- deux dispositifs de positionnement (10a, 10b) relié au corps de base (2) avec chacun une région de maintien (11a, 11b), dans lequel chaque région de maintien (11a, 11b) est réalisée de telle sorte qu'une région de contact (15a, 15b) du câble (13a, 13b) peut être fixée de manière amovible au dispositif de positionnement (10a, 10b) et le connecteur (14a, 14b) à une région de maintien de connecteur (9a, 9b) de la région de maintien (11a, 11b), et
dans laquelle exactement un câble (13a, 13b) est associé de manière non permutable à chaque dispositif de positionnement (10a, 10b),
- disposition de la boîte de jonction (1) sur une surface de l'au moins une carte imprimée, dans lequel la boîte de jonction (1) est reliée électriquement à la carte imprimée,
- mise en contact, notamment mise en contact automatique, de l'au moins un connecteur au moyen d'un dispositif de contrôle,
- contrôle de la fonction du système comprenant boîte de jonction et carte imprimée.

12. Procédé selon la revendication 11, comprenant en outre l'étape supplémentaire de :
détachement de la région de contact (15a, 15b) du dispositif de positionnement (10a, 10b).

13. Utilisation d'une boîte de jonction (1) selon l'une quelconque des revendications 1 à 9 pour la disposition sur une carte imprimée, notamment sur un module solaire, dans laquelle la boîte de jonction (1) est disposée sur une surface de la carte imprimée.
